# EUROPÄISCHE PATENTANMELDUNG

(11) **EP 1 101 806 A2**
(43) Veröffentlichungstag der Anmeldung: **23.05.2001**
(21) Anmeldenummer: 00124092.8
(22) Anmeldetag: 07.11.2000
(51) Int. Cl.: C09D 17/00, C09C 1/00, C09C 3/08

(54) **Pigmentpräparation**

(30) Priorität: 18.11.1999 DE 19955477
(71) Anmelder: MERCK PATENT GmbH, 64293 Darmstadt (DE)
(72) Erfinder: Hechler, Wolfgang, 64686 Lautertal (DE); Herget, Gerhard, Dr., 64372 Ober-Ramstadt (DE); Husseini, Brigitte, 64293 Darmstadt (DE); Schoen, Sabine, Dr., 64287 Darmstadt (DE)

(57) **Zusammenfassung**

Die Erfindung betrifft eine nichtstaubende, lösemittelhaltige, homogene Pigmentpräparation, die sich dadurch auszeichnet, daß sie
- ≥ 70 Gew. % eines oder mehrerer Effektpigmente
- 0,1 - 30 Gew. % eines organischen Lösemittels oder Lösemittelgemisches mit einer Verdunstungszahl (VZ) von 10 bis 100 und einer Oberflächenspannung (ST) von ≤ 35 mN/m
und gegebenenfalls
- 0 - 5 Gew. % einer oberflächenaktiven Substanz
enthält.

## Beschreibung

Die Erfindung betrifft eine nichtstaubende, lösemittelhaltige, homogene Pigmentpräparation und deren Verwendung, insbesondere in Druckfarben.

In technischen Prozessen werden Pigmente vielfach nicht als trockene Pulver eingesetzt, da diese stauben, was zu erhöhten Anforderungen im Hinblick auf die Arbeitsplatzsicherheit führt. Weiterhin wird bei der Einbringung von Pulvern in Kunststoffe, Basislacksysteme, etc. vielfach eine Agglomeration des Pigmentpulvers beobachtet. Eine homogene Verteilung des Pigments in der jeweiligen Matrix ist vielfach nur schwer oder aber gar nicht zu erreichen.

Anstelle des Pigmentpulvers werden nicht staubende Pigmentzubereitungen verwendet. Hierbei handelt es sich um
- pigmentierte rieselfähige Pulver mit einem geringen Feuchtegehalt, wie sie z.B. aus der DE-OS-41 39 993 bekannt sind,
- pigmentierte Pulver mit einem höheren Feuchtegehalt, wobei letztere häufig auch aufgrund ihrer fließfähigen Konsistenz als Pasten bezeichnet werden, oder um
- Perlglanzpigmente, die mit einem Alkylenglykolalkylether in Mengen von 5 - 20 Gew.% beschichtet sind, wie aus der U.S. 5,234,496 bekannt.

Pasten sind eine technische Alternative zu den trockenen oder angefeuchteten Pulvern, wenn sie folgende Rahmenbedingungen erfüllen:
- fließfähige Konsistenz
- möglichst geringe Dilatanz
- möglichst hoher Pigmentgehalt

Die Komponenten der Zubereitung sollten dabei so gewählt sein, daß die Zubereitung möglichst gut auf die anderen Komponenten des jeweiligen Beschichtungssystems abgestimmt ist und sich nach der Einbringung leicht homogen verteilt.

Neben einer guten Kompatibilität mit den weiteren Bestandteilen des Beschichtungssystems müssen Pigmentzubereitungen eine hohe Stabilität aufweisen, d.h., sie dürfen weder zur Phasenseparation neigen, noch ihre Zusammensetzung insgesamt ändern. Diese Forderung ist besonders wichtig bei Pigmentzubereitungen auf der Basis plättchenförmiger Pigmente, da diese auf Grund ihrer lockeren Struktur zur Phasenseparation neigen. So weist z.B. eine lösemittelhaltige Pigmentzubereitung, welche durch Anteigen eines Pulvers aus Perlglanzpigmenten, Lösemittel und Wasser erhalten wird, häufig eine unzureichende Stabilität auf, insofern, als sich die Komponenten separieren und die oberen Bereiche der Füllung trocken fallen.

Pigmentpräparationen enthaltend zu flüchtige Stoffe, wie z.B. niedrig siedende organische Lösemittel, haben in der Regel den Nachteil, daß sie infolge der Flüchtigkeit des Lösemittels instabil in der Zusammensetzung sind. Weiterhin ist die Benetzung von Perlglanzpigmenten mit organischen Stoffen und Lösemitteln aufgrund hoher Oberflächenspannung nur schwer zu erreichen, da diese Pigmente bedingt durch ihre Sandwich-Struktur gerade an der Oberfläche besonders viele Poren besitzen und diese zum großen Teil auch schwer zugänglich sind für flüssige Stoffe (im Gegensatz zu herkömmlichen organischen und anorganischen Pigmenten).

Die bisher zur Verwendung in Beschichtungssystemen entwickelten lösemittelhaltigen Zubereitungen mit Perlglanzpigmenten mit einem Pigmentanteil > 30 Gew.% und < 70 Gew.% genügen den beschriebenen Anforderungen nur unzureichend, insbesondere deshalb, da sie zur Scherverdickung neigen.

Die Aufgabe der vorliegenden Erfindung bestand daher in der Bereitstellung einer rieselfähigen Pigmentpräparation, enthaltend mindestens 70 Gew.% an Effektpigmenten. Die Präparation sollte dabei eine hohe Lagerstabilität aufweisen und sich gleichzeitig durch eine hohe Kompatibilität mit den übrigen Komponenten des Beschichtungssystems auszeichnen.

Im Druckbereich kommt es insbesondere darauf an eine einmal applizierte Druckfarbe in sehr kurzer Zeit von allen flüchtigen Komponenten zu befreien, so daß ein Geruch nach diesen Substanzen im trockenen Produkt nicht nachweisbar ist (Robinson-Test). Es ist daher auch darauf zu achten, daß die Verdunstungszahl eine bestimmte Obergrenze nicht überschreitet.

Es wurde gefunden, daß diese Aufgabe durch die Bereitstellung der erfindungsgemäßen Pigmentpräparation gelöst werden kann.

Gegenstand der Erfindung ist somit eine nichtstaubende, homogene Pigmentpräparation, die
- ≥ 70 Gew. % eines oder mehrerer Effektpigmente,
- 0,1 - 30 Gew. % eines organischen Lösemittels oder Lösemittelgemisches mit einer Verdunstungszahl (VZ) von 10 bis 100 und einer Oberflächenspannung (ST) von ≤ 35 mN/m
und gegebenenfalls
- 0 - 20 Gew. % einer oberflächenaktiven Substanz
enthält.

Die erfindungsgemäße Präparation ist in Abhängigkeit vom Feuchtegehalt ein rieselfähiges Pulver, das sich insbesondere für die Einarbeitung in Druckfarben eignet. Insbesondere wird bei der erfindungsgemäßen Präparation die Zeitdauer verkürzt, die benötigt wird, um das Pigment in die Druckfarbe einzurühren. Weiterhin wird das Problem der Schaumbildung bei der Einarbeitung der Präparation in wäßrige Druckfarbensysteme drastisch reduziert. Die erfindungsgemäße Pigmentpräparation führt ebenfalls dazu, daß die "Endviskosität" in der pigmentierten Druckfarbe schneller erreicht wird. Die so pigmentierten Druckfarben sind lagerstabil und lassen sich besonders gut wiederaufrühren.

Die erfindungsgemäßen Pigmentpräparationen sind ebenfalls lagerstabil und neigen nicht dazu sich im Lagergefäß zu separieren oder in der Zusammensetzung zu verändern.

Wesentlicher Bestandteil der erfindungsgemäßen Pigmentpräparation sind die Effektpigmente, wie z.B., Perlglanzpigmente, Interferenzpigmente, Mehrschichtpigmente, plättchenförmige Metalloxide, wie z.B. Fe₂O₃, TiO₂, SiO₂, Al₂O₃, die mit ein oder mehreren Metalloxiden und/oder Metallsulfiden beschichtet sind, holographische Pigmente, funktionelle Pigmente auf Basis plättchenförmiger Substrate, sowie alle dem Fachmann bekannten Glanzpigmente.

Durch die Verwendung eines organischen Lösemittels oder Lösemittelgemisches, vorzugsweise eines Esters, Ketons, Alkohols, Mineralöls oder aromatischen Lösemittels, wird eine hervorragende Benetzung des Effektpigmentes erzielt, insbesondere bei Pigmenten mit einer hohen Porosität, wie z.B. Perlglanzpigmente.

Als Perlglanzpigmente werden Pigmente auf der Basis plättchenförmiger, transparenter oder semitransparenter Substrate aus z.B. Schichtsilikaten, wie etwa natürlicher oder synthetischer Glimmer, Talkum, Sericit, Kaolin, aus Glas oder anderen silikatischen Materialien aus Glas oder Graphit verwendet, die mit farbigen oder farblosen Metalloxiden wie z. B. TiO₂, Titansuboxide, Titanoxinitride, Fe₂O₃, Fe₃O₄, SnO₂, Cr₂O₃, ZnO, CuO, NiO und anderen Metalloxiden allein oder in Mischung in einer einheitlichen Schicht oder in aufeinanderfolgenden Schichten belegt sind. Perlglanzpigmente sind z.B. aus den deutschen Patenten und Patentanmeldungen 14 67 468, 19 59 998, 20 09 566, 22 14 454, 22 15 191, 22 44 298, 23 13 331, 25 22 572, 31 37 808, 31 37 809, 31 51 343, 31 51 354, 31 51 355, 32 11 602, 32 35 017 und P 38 42 330 bekannt und im Handel erhältlich, z.B. unter der Marke Iriodin® der Fa. Merck KGaA, Darmstadt, Deutschland. Besonders bevorzugte Pigmentpräparationen enthalten TiO₂/Glimmer-, Fe₂O₃/Glimmer- und/oder TiO₂/Fe₂O₃-Glimmerpigmente.

Weiterhin bevorzugt sind mit TiO₂ und/oder Fe₂O₃ beschichtete SiO₂- oder Al₂O₃-Plättchen. Die Beschichtung der SiO₂-Plättchen mit ein oder mehreren Metalloxiden kann z.B. erfolgen wie in der WO 93/08237 (naßchemische Beschichtung) oder DE-OS 196 14 637 (CVD-Verfahren) beschrieben. Beschichtete Al₂O₃-Plättchen sind beispielsweise aus der EP 0 763 573 bekannt.

Die erfindungsgemäßen Pigmentpräparationen können ein oder mehrere Effektpigmente enthalten. Vielfach können durch die Verwendung von mindestens zwei verschiedenen Effektpigmenten besondere Farb- und Glanzeffekte erzielt werden.

Die erfindungsgemäße Pigmentpräparation enthält vorzugsweise ≥ 70 Gew.% an Effektpigmenten, insbesondere ≥ 80 Gew.%. Ganz besonders bevorzugt sind Pigmentpräparationen mit einem Gehalt an Effektpigmenten von mehr als 85 Gew.%. Vorzugsweise werden ein oder mehrere Perlglanzpigmente eingesetzt. Die Gew.%-Angaben beziehen sich auf die angeteigte Pigmentpräparation.

Als organisches Lösemittel kommen für die erfindungsgemäße Pigmentpräparation, insbesondere für deren Einsatz im Druck- und Verpackungsbereich, Ester, Alkohole, Di- und Trialkohole, Ketone, Polyole, Mineralöle und/oder aromatische Lösemittel in Frage.

Die genannten Lösemittel weisen Verdunstungszahlen von 10 bis 100 auf um insbesondere beim Druck eine schnellere Trocknung zu erzielen, wie es bei schnell laufenden Druckmaschinen erforderlich ist. Vorzugsweise liegt die Verdunstungszahl (VZ) des eingesetzten Lösemittels oder Lösemittelgemisches im Bereich von 12 bis 40, insbesondere im Bereich von 15 bis 30 (Diethylether = 1), um eine schnelle Trocknung zu gewährleisten und um den Geruch des Druckmusters zu minimieren. Die Oberflächenspannung des Lösemittels sollte ≤ 35 mN/m, insbesondere ≤ 30 mN/m, betragen.

Neben der Verdunstungszahl sollte das Lösemittel vorzugsweise eine Dielektrizitätskonstante von ≥ 4, vorzugsweise ≥ 6, aufweisen. Die Viskosität der eingesetzten Lösemittel bzw. Lösemittelgemische liegt in der Regel im Bereich von ≤ 20 cp, vorzugsweise ≤ 5 cp.

Lösemittel, die die genannten Bedingungen der physikalischen Parameter erfüllen sind z.B. 4-Methyl-2-pentanol (VZ = 66; ST = 22,7), 2-Butanol (VZ = 15; ST = 23,3), 2,6 Dimethyl-4-heptanon (VZ = 48; ST = 22,6), 1-Methoxy-2-propylacetat (VZ = 34; ST = 27,6), Xylol (VZ=17,3, ST=28,7), Aromatic 100* (aromatische Lösemittelgemische), wie sie z.B. von der Fa. Eastman angeboten werden (VZ=41,7, ST=29,0) (technisches Datenblatt der Fa. Eastman, M-167 R, November 1992).

Alkylenglykolalkylether, wie z. B. Ethylenglykolmonobutylether (VZ = 160), Diethylenglykol-n-butylether (VZ = 37,50), Propylenglykol-n-butylether (VZ = 156), Lösemittel wie sie im Stand der Technik U.S. 5,234,496 eingesetzt werden, besitzen zu hohe Verdunstungszahlen und sind daher für die erfindungsgemäßen Anteigungen nicht geeignet.

Häufig empfiehlt es sich der erfindungsgemäßen Pigmentpräparation ein Benetzungsmittel bzw. eine oberflächenaktive Substanz in Mengen von 0 bis 5 Gew.%, vorzugsweise 0,01 bis 3 Gew.%, insbesondere 0,05 bis 1 Gew.%, zuzusetzen. Geeignete Benetzungsmittel sind insbesondere solche, die eine hydrophobe Molekülseitenkette enthalten, wie z.B. Alkylsilane, die auch eine weitere funktionelle Gruppe enthalten können, ungesättigte oder gesättigte Fettsäuren oder Fluortenside. Insbesondere bevorzugt werden Silanverbindungen der Formel (CₙH₂ₙ₊₁)Si(OCₘH₂ₘ₊₁)₃, worin n 1 - 30 und m 1 - 10 bedeutet, als oberflächenaktive Substanzen eingesetzt. Geeignete Silanverbindungen sind beispielsweise n-Hexyl-decyltriethoxysilan und n-Octyldecyl-triethoxysilan (Si 116 bzw. Si 118 der Degussa Hüls AG, Frankfurt, BRD) sowie die entsprechenden Fluoralkylsilane.

Ferner werden als oberflächenaktive Substanzen die gesättigten und ungesättigten Fettsäuren, wie z.B. Capronsäure, Caprylsäure, Caprinsäure, Laurinsäure, Myristinsäure, Palmitinsäure, Stearinsäure, Ölsäure, Linolsäure sowie Fettsäuregemische eingesetzt.

Geeignete Tenside bestehen aus einer längeren Alkylkette, die auch ein- oder mehrfach fluoriert sein kann, und einer hydrophilen oder organophilen Kopfgruppe, wie z.B. eine Polyoxyethylen-, Carboxyl- oder Sulfongruppe.

Sie sind kationisch, nicht-ionisch oder anionisch aufgebaut. Es kommen insbesondere Fluortenside zum Einsatz, die unter den Handelsnamen FLUORAD FC430 bzw. FC431 (Fa. 3M) und Borchigol FT448 (Fa. Borchers, Düsseldorf, Deutschland) vertrieben werden.

Vorzugsweise enthält die Pigmentpräparation ein Silan, ein Tensid oder eine Fettsäure. Bei dem oberflächenaktiven Reagenz kann es sich auch um ein Gemisch aus Silan, Fettsäuren und/oder Tensiden handeln.

Geeignete oberflächenaktive Substanzen sind auch Schichtsilikate, vor allem solche aus der Gruppe der Smektitreihe, wie z.B. Montmorillonit/Beidellit-Reihe. Die genannten Smektite zeichnen sich insbesondere durch ihr ausgeprägtes Quellverhalten aus. Im Handel werden diese Produkte z.B. unter der Marke Laponite, ein synthetisches Natrium-Magnesium-Lithium-Silikat, welches dem Hectorit ähnelt, von der Fa. Laporte UK oder von der Fa. Südchemie, BRD unter den Namen Optigel CG, ein Bentonit, bzw. Tixogel PE, ein organophiles hydrophobiertes Smectit, vertrieben. Es kommen aber auch glimmerartige Silikate der Vermiculit- und der Illitreihe sowie die Glimmer selbst (Muscovit, Phlogopit, Biotit) in Frage. Entscheidend ist die plättchemförmige Beschaffenheit der Partikel und ihre Aufschließbarkeit im Sprühtrockenprozeß.

Bei der Oberflächenmodifizierung können auch Gemische der genannten Schichtsilikate sowie modifizierte Schichtsilikate eingesetzt werden. Vorzugsweise werden die Schichtsilikate in einer aktivierten Form eingesetzt, d.h., die Silikate werden in Wasser dispergiert, in ein Sol überführt und anschließend sprühgetrocknet.

Der erfindungsgemäßen Pigmentpräparation können während oder nach der Herstellung weitere übliche Additive zugesetzt werden, wie z.B. Entschäumer, Netzmittel, Antiabsetzmittel, Verlaufsmittel oder Thixotropiermittel. Es handelt sich hierbei um in der Druckindustrie übliche Hilfsstoffe, die in der erfindungsgemäßen Pigmentpräparation in einer Menge von 0 bis 10 Gew.% enthalten sein können.

Die Herstellung der erfindungsgemäßen Pigmentpräparation erfolgt einfach dadurch, daß zu dem Effektpigment bzw. Effektpigmentgemisch, das Lösemittel und gegebenenfalls weitere Additive gleichzeitig oder nacheinander hinzugegeben werden, und daß diese Mischung in einem Mischgerät, insbesondere einem Dispermaten, schonend homogenisiert wird. Vorzugsweise wird das Pigment vorgelegt und mit wenig Lösemittel angeteigt.

Die erfindungsgemäße Präparation wird in Beschichtungssystemen aus den Bereichen Druck, Lack und Farbe eingesetzt. Besonders bevorzugt wird die Präparation auf beliebige Substratmaterialien, beispielsweise Metalle wie Eisen, Stahl, Aluminium, Kupfer, Bronze, Messing sowie Metallfolien aber auch metallüberzogene Oberflächen von Glas, Keramik und Beton, als auch auf Holz, z.B. Möbel, Ton, Textil, Papier, Verpakkungsmaterialien, z.B. Kunststoffbehälter, Folien oder Pappen, oder auf anderen Materialien zu dekorativen und/oder schützenden Zwecken aufgebracht.

Gegenstand der Erfindung ist somit auch die Verwendung der Pigmentpräparation in Formulierungen wie Farben, Lacken, Druckfarben und Kunststoffen.

Die nachfolgenden Beispiele sollen die Erfindung näher erläutern, ohne sie jedoch zu beschränken.

### Beispiele

### Beispiel 1

540 g Iriodin® 123 (TiO₂-Glimmerpigment mit einer Teilchengröße von 5 - 20 µm der Fa. Merck KGaA, Deutschland) werden vorgelegt und unter Rühren werden 60 g 1-Methoxy-2-propylacetat (VZ = 34, ST = 27,6) zugegeben. Es wird homogen gemischt und das feuchte, homogene Präparat wird ausgetragen und in Glasflaschen gasdicht abgefüllt.

### Beispiel 2

1020 g mit Fe203 beschichtete SiO₂-Plättchen der Teilchengröße von 5 - 40 µm der Fa. Merck KGaA, Deutschland) werden vorgelegt und unter Rühren werden 180 g 2,6-Dimethyl-4-heptanon (VZ = 48, ST = 22,6) zugegeben. Es wird homogen gemischt und das feuchte, homogene Präparat wird ausgetragen und in Glasflaschen gasdicht abgefüllt.

### Beispiel 3

540 g Iriodin® 123 (TiO₂-Glimmerpigment mit einer Teilchengröße von 5 - 20 µm der Fa. Merck KGaA, Deutschland) werden vorgelegt und unter Rühren wird ein 1:1 Gemisch aus 30 g 1-Methoxy-2-propylacetat und 30 g 2,6-Dimethyl-4-heptanon zugegeben. Es wird homogen gemischt und das feuchte, homogene Präparat wird ausgetragen und in Glasflaschen gasdicht abgefüllt.

### Beispiel 4

270 g Xirallic® Crystal Silver (mit TiO₂ beschichtete Al₂O₃-Plättchen der Teilchengröße 10 - 30 µm, Fa. Merck KGaA, Deutschland) werden vorgelegt und unter Rühren werden 30 g 2,6-Dimethyl-4-heptanon zugegeben. Es wird homogen gemischt und das feuchte, homogene Präparat wird ausgetragen und in Glasflaschen gasdicht abgefüllt.

### Beispiel 5

Paliocrom® L 2000 (mit Eisenoxid beschichtetes Aluminium der Teilchengröße 10 - 36 µm, Fa. BASF, Deutschland) werden vorgelegt und unter Rühren werden 60 g 1-Mehoxy-2-propylacetat (VZ = 34, ST = 27,6) zugegeben. Es wird homogen gemischt und das feuchte, homogene Präparat wird ausgetragen und in Glasflaschen gasdicht abgefüllt.

### Beispiel 6

540 g Iriodin® 123 (TiO₂-Glimmerpigment mit einer Teilchengröße von 5-20 µm der Fa. Merck KGaA, BRD) werden vorgelegt und unter Rühren werden 60 g 1-Methoxy-2-propylacetat und 12 g Laponite® RDS (natürliches Schichtsilikat der Fa. Laporte) zugegeben. Es wird homogen gemischt und das feuchte, homogene Präparat wird ausgetragen und in Glasflaschen gasdicht abgefüllt.

### Beispiel 7

540 g Iriodin® 123 (TiO₂-Glimmerpigment mit einer Teilchengröße von 5 - 20 µm der Fa. Merck KGaA, BRD) werden vorgelegt und unter Rühren werden 60 g 1-Methoxy-2-propylacetat und 5 g Byk 307 (Silikontensid der Fa. Byk) zugegeben. Es wird homogen gemischt und das feuchte, homogene Präparat wird ausgetragen und in Glasflaschen gasdicht abgefüllt.

## Patentansprüche

1. Nichtstaubende homogene Pigmentpräparation, dadurch gekennzeichnet, daß sie
- ≥ 70 Gew. % eines oder mehrerer Effektpigmente
- 0,1 - 30 Gew. % eines organischen Lösemittels oder Lösemittelgemisches mit einer Verdunstungszahl (VZ) von 10 bis 100 und einer Oberflächenspannung (ST) von ≤ 35 mN/m
und gegebenenfalls
- 0 - 5 Gew. % einer oberflächenaktiven Substanz
enthält.

2. Nichtstaubende homogene Pigmentpräparation nach Anspruch 1, dadurch gekennzeichnet, daß das Effektpigment ein Perlglanzpigment ist.

3. Nichtstaubende homogene Pigmentpräparation nach Anspruch 1 oder 2, dadurch gekennzeichnet, daß das Perlglanzpigment ein mit TiO₂ und/oder Fe₂O₃ beschichtetes Glimmerplättchen ist.

4. Nichtstaubende homogene Pigmentpräparation nach einem der Ansprüche 1 bis 3, dadurch gekennzeichnet, daß das organische Lösemittel bzw. Lösemittelgemisch ein Keton, Ester, Alkohol, Di- und Trialkohol, Polyol, Mineralöl oder aromatisches Lösemittel ist.

5. Nichtstaubende homogene Pigmentpräparation nach einem der Ansprüche 1 bis 4, dadurch gekennzeichnet, daß das Lösemittel 1-Methoxy-2-propylacetat ist.

6. Nichtstaubende homogene Pigmentpräparation nach einem der Ansprüche 1 bis 5, dadurch gekennzeichnet, daß die oberflächenaktive Substanz ein Fluortensid, Silikontensid, Silan, Schichtsilikat oder eine Fettsäure ist.

7. Nichtstaubende homogene Pigmentpräparation nach einem der Ansprüche 1 bis 6, dadurch gekennzeichnet, daß sie zusätzlich ein Redispergiermittel enthält.

8. Nichtstaubende homogene Pigmentpräparation nach einem der Ansprüche 1 bis 7, dadurch gekennzeichnet, daß sie als zusätzliche Komponenten Entschäumer, Netzmittel, Antiabsetzmittel, Sikkative und/oder Thioxotropiermittel enthalten kann.

9. Verwendung der Pigmentpräparation nach Anspruch 1 in Farben, Druckfarben, Flüssigfarben und Kunststoffen.
